# EUROPÄISCHE PATENTANMELDUNG

(11) **EP 4 756 487 A1**
(43) Veröffentlichungstag der Anmeldung: **10.06.2026**
(21) Anmeldenummer: 24217677.4
(22) Anmeldetag: 05.12.2024
(51) Int. Cl.: G01S 7/481, G01S 7/497, G01S 17/10

(54) **SENDE-EMPFANGS-EINHEIT FÜR EINEN LIDAR-SENSOR, LIDAR-SENSOR, UND VERFAHREN ZUR FUNKTIONSDIAGNOSE EINES LIDAR-SENSORS**

(71) Anmelder: Universität Kassel (Körperschaft d. öffentlichen Rechts), 34125 Kassel (DE)
(72) Erfinder: Börcsok, Josef, 68753 Waghäusel (DE); Telawi, Samer, 34125 Kassel (DE); Michel, Jakob, 34134 Kassel (DE)
(74) Vertreter: Walther Bayer Faber Patentanwälte PartGmbB

(57) **Zusammenfassung**

Gegenstand der Erfindung ist eine Sende-Empfangs-Einheit (1) für einen Lidar-Sensor (100), umfassend eine Mehrzahl von Sendeelementen (11) zur Aussendung von Laserlicht (L) in eine Betriebsumgebung des Lidar-Sensors (100) und eine Mehrzahl von Empfangselementen (12) zum Empfang von in der Betriebsumgebung reflektiertem Laserlicht (L). Erfindungsgemäß sind die Sendeelemente (11) und die Empfangselemente (12) in einer gemeinsamen Ebene angeordnet, wobei die Hauptsenderichtung der Sendeelemente (11) und die Hauptempfangsrichtung der Empfangselemente (12) zueinander kollinear orientiert sind.

## Beschreibung

Die Erfindung betrifft eine Sende-Empfangs-Einheit basierend auf einer Mehrzahl von Laserlicht-Sendeelementen und -Empfangselementen, einen damit ausgestatteten Lidar-Sensor, sowie ein Verfahren zur Funktionsdiagnose eines solchen Lidar-Sensors.

### STAND DER TECHNIK

Lidar-Sensoren (Light Detection and Ranging) dienen der elektro-optischen Fernerkundung, insbesondere um die Entfernung und Relativgeschwindigkeit zu Objekten der Betriebsumgebung zu bestimmen. Lidar-Sensoren basieren auf der Emission von Laserlicht in die Betriebsumgebung und dessen Detektion nach Reflektion, wobei insbesondere mittels Bestimmung der Laufzeit oder der Phasenlage des detektierten Laserlichts der Abstand zum reflektierenden Objekt ermittelt werden kann. Lidar-Sensoren finden in vielen Bereichen Anwendung, z. B. in der autonomen Fahrzeugtechnik, Robotik und Geomapping.

Zur Abtastung großer Raumwinkelbereiche sind insbesondere rotierende Systeme bekannt, bei denen beispielsweise eine rotierende Optik oder dynamisch gesteuerte MEMS-Spiegel zur sukzessiven Ausleuchtung der Betriebsumgebung durch Laserlicht eingesetzt werden. Unter dem Gesichtspunkt der Ausfallsicherheit sind Lidar-Sensoren mit beweglichen Komponenten als nachteilig anzusehen. Alternativ sind sogenannte Flash-Lidar-Sensoren bekannt, die dedizierte Optiken aufweisen, mittels denen eine Aufweitung der Laserlichtpulse auf den gewünschten Raumwinkel erfolgt, sodass entsprechende Bereiche der Betriebsumgebung simultan erfasst werden können. Diese Systeme benötigen keine beweglichen Komponenten, allerdings ist aufgrund der ausgeprägten Strahlaufweitung die Reichweite signifikant beschränkt.

Beispielsweise offenbart die Druckschrift DE 10 2017 125 686 A1 einen Lidar-Sensor mit einer Vielzahl von Sendeelementen, die auf einem Vollkreis hinter einem Linsensystem angeordnet sind, sodass Laserlicht simultan um 360° in die Betriebsumgebung ausgesendet werden kann. Das reflektierte Licht wird von einer Panoramaoptik auf einen zentralen Sensorchip gelenkt.

Insbesondere für den Einsatz in sicherheitskritischen Anwendungen wie etwa dem autonomen Fahren ist eine weitere Steigerung der Robustheit und Ausfallsicherheit von Lidar-Sensoren wünschenswert.

### OFFENBARUNG DER ERFINDUNG

Es ist die Aufgabe der vorliegenden Erfindung, eine Weiterbildung einer gattungsgemäßen Sende-Empfangs-Einheit für einen Lidar-Sensor basierend auf einer Mehrzahl von Sendeelementen zur Aussendung von Laserlicht sowie zugehörigen Empfangselementen vorzuschlagen, die insbesondere hohe Ansprüche an die Betriebssicherheit erfüllt.

Diese Aufgabe wird gelöst von einer Sende-Empfangs-Einheit gemäß Anspruch 1, einem zugehörigen Lidar-Sensor gemäß Anspruch 7 und einem Verfahren zu dessen Funktionsdiagnose gemäß Anspruch 12. Vorteilhafte Weiterbildungen der Erfindung sind in den abhängigen Ansprüchen angegeben.

Die Erfindung offenbart, dass die Sendeelemente und die Empfangselemente der Sende-Empfangs-Einheit in einer gemeinsamen Ebene angeordnet sind, wobei die Hauptsenderichtung der Sendeelemente und die Hauptempfangsrichtung der Empfangselemente zueinander kollinear orientiert sind. Die Hauptsenderichtung bezeichnet dabei diejenige Richtung, in der das Laserlicht aus den Sendeelementen austritt, und die Hauptempfangsrichtung entspricht dem Lot auf die aktive Sensorfläche der Empfangselemente, die insbesondere als Photodioden ausgebildet sind.

Der Grundgedanke besteht darin, mit der erfindungsgemäßen Sende-Empfangs-Einheit ein integriertes Bauteil zu schaffen, das sämtliche Sende- und Empfangselemente in einer flächig-kompakten Anordnung umfasst, insbesondere auf einer gemeinsamen Leiterkarte. Dabei ist vorgesehen, dass der zugehörige Lidar-Sensor eine Optikeinheit umfasst, mittels der sowohl die Aussendung des Laserlichts in die Betriebsumgebung als auch die Umlenkung des in der Betriebsumgebung reflektierten Lichts auf die Empfängerelemente realisiert werden. Die Sende-Empfangs-Einheit ist dank dieses integrierten Aufbaus ein besonders kompaktes, robustes und wenig verschleißanfälliges Bauteil, und zudem können - wie im Folgenden dargestellt - durch zweckmäßige Anordnungen und Gruppierungen der Sende- und Empfangselemente sicherheitsorientierte Architekturen mit Diagnosefunktionen realisiert werden, die die Sende-Empfangs-Einheit zum Betrieb unter hohen Anforderungen an die funktionale Sicherheit qualifizieren.

In vorteilhafter Ausführungsform sind die Sendeelemente und die Empfangselemente in Gruppen angeordnet, wobei jede Gruppe wenigstens ein Sendeelement und ein Empfangselement umfasst. Insbesondere weist die Gesamtheit der Gruppen eine gitterförmige Anordnung unter Bildung der aktiven Fläche der Sende-Empfangs-Einheit auf, wobei jede Gruppe einen Bildpunkt der aktiven Fläche darstellt. Jeder Bildpunkt ist somit zum Aussenden von Laserlicht und zu dessen Detektion ausgebildet. Die Gesamtheit der Gruppen bildet eine im Wesentlichen lückenlose Partition der aktiven Fläche, wobei die Struktur des von den Gruppen gebildeten Gitters an den jeweiligen Lidar-Sensor angepasst werden kann. Beispielsweise kann die aktive Fläche eine kreisring- oder kreisausschnittsförmige Gestalt aufweisen, die durch Gruppen mit ringsegmentförmiger Kontur partitioniert ist. Eine polygonale aktive Fläche kann etwa durch ein Matrixgitter von beispielsweise quadratischer oder hexagonaler Kontur gebildet sein.

Insbesondere kann jede Gruppe wenigstens zwei gleichartige Sendeelemente und wenigstens zwei gleichartige Empfangselemente aufweisen. Dadurch kann eine Redundanz geschaffen werden, die die Funktion des von der Gruppe gebildeten Bildpunktes auch beim Ausfall eines Sende- oder Empfangselements gewährleistet. Komplexere Gruppen mit je drei oder mehr Sende- und Empfangselementen können die funktionale Sicherheit weiter steigern. Beispielsweise können die in der ISO-Norm 26262 definierten Sicherheitslevel betreffend die funktionale Sicherheit von elektronischen Systemen in Kraftfahrzeugen erreicht werden, etwa die Level "SIL3", "ASILC" oder "ASILD".

In einem weiteren Ausführungsbeispiel weist jede Gruppe wenigstens ein Sendeelement zur Aussendung von Laserlicht einer ersten Wellenlänge, wenigstens ein Sendeelement zur Aussendung von Laserlicht einer zweiten Wellenlänge, wenigstens ein Empfangselement mit einer maximalen Empfindlichkeit im Bereich der ersten Wellenlänge und wenigstens ein Empfangselement mit einer maximalen Empfindlichkeit im Bereich der zweiten Wellenlänge auf. Beispielsweise wird Laserlicht mit einer ersten Wellenlänge von 905 nm und Laserlicht mit einer zweiten Wellenlänge von 1550 nm eingesetzt. Durch die Verwendung zweier Wellenlängen wird die Umgebungserfassung robuster gegenüber Änderungen der Lichtverhältnisse in der Betriebsumgebung, etwa gegenüber der parasitären Wirkung von natürlichen Infrarot-Anteilen des Sonnenlichts. Zudem bietet die Verwendung unterschiedlicher Wellenlängen erweiterte Optionen zur Funktionsdiagnose der Sende-Empfangs-Einheit.

Die Erfindung betrifft zudem einen Lidar-Sensor, wenigstens umfassend eine Sende-Empfangs-Einheit gemäß einer der vorgenannten Ausführungsformen, eine Optikeinheit zur Umlenkung des Laserlichts der Sendeelemente in eine Betriebsumgebung des Lidar-Sensors und zum Umlenken des in der Betriebsumgebung reflektierten Laserlichts auf die Empfangselemente, und eine Steuer- und Auswerteeinheit zur Steuerung der Sende-Empfangs-Einheit und zur Auswertung insbesondere der Lichtlaufzeit zwischen den Sendeelementen und den Empfangselementen. Die Optikeinheit ist in der Hauptsenderichtung der Sendeelemente vor der Sende-Empfangs-Einheit angeordnet. Die Optikeinheit ist beispielsweise als ein katadioptrisches System ausgebildet, welches eine zweckmäßige Lichtumlenkung bewirkt, etwa in einen Winkelbereich um 90°. Ausgehend von den Sendelementen wird das Laserlicht nach Umlenkung an der Optikeinheit in die Betriebsumgebung des Lidar-Sensors ausgesendet, und nach Reflexion in der Betriebsumgebung auf die Optikeinheit zurückgeworfen und auf die Empfangselemente umgelenkt. Die Signalauswertung zur Erzeugung eines dreidimensionalen Abbilds der erfassten Betriebsumgebung kann mittels der Steuer- und Auswerteeinheit auf im Stand der Technik gebräuchliche Art und Weise durchgeführt werden, insbesondere basierend auf einer Laufzeitmessung des Laserlichts.

In einer Ausführungsform des Lidar-Sensors weist die Optikeinheit ein Sichtfeld von 360° auf. Eine derartige Panoramaoptik ist beispielsweise aus der Druckschrift DE 10 2017 125 686 A1 bekannt. Die Optikeinheit kann derart ausgebildet sein, dass sich die Rundumsicht, entsprechend einem Horizontalwinkelbereich von 360°, über einen Höhenwinkelbereich von beispielsweise bis zu 90° erstreckt, sodass das gesamte Sichtfeld einen Raumwinkelbereich von 2π sr erfasst. Vorzugsweise wird eine solche Panoramaoptik mit einer Sende-Empfangs-Einheit kombiniert, deren aktive Fläche kreisringförmig ausgebildet ist.

In einer weiteren Ausführungsform weist die Optikeinheit zumindest abschnittsweise eine dielektrische Beschichtung auf, deren Wirkung darin besteht, dass Anteile des von den Sendeelementen ausgesendeten Laserlichts zwecks Funktionsdiagnose auf die Empfangselemente reflektiert werden, d.h., dass diese Anteile des Laserlichts nicht in die Betriebsumgebung des Lidar-Sensors ausgesendet werden, sondern durch die Reflexion an der Optikeinheit direkt bzw. über weitere Reflexionen innerhalb des Lidar-Sensors auf die Empfangselemente gelenkt werden. Wie nachstehend detaillierter beschrieben, kann der Lidar-Sensor im Hinblick auf seine Ausfallsicherheit zu weitgehender Funktionsdiagnose ausgebildet sein, und die Verwendung derartiger intern reflektierter Lichtanteile erlaubt die Funktionsdiagnose unabhängig von der konkreten Betriebsumgebung.

Insbesondere kann eine dielektrische Beschichtung auf einer Linse der Optikeinheit aufgebracht sein, und zwar auf einer der Sende-Empfangs-Einheit zugewandten Oberfläche der Linse, wobei die dielektrische Beschichtung eine teilreflektierende Wirkung auf das von den Sendeelementen ausgesendete Laserlicht aufweist. Beispielsweise ist die dielektrische Beschichtung als ein Multilayer-Schichtverbund ausgebildet, wobei durch Auswahl der Schichtanzahl, der Schichtdicken und der Brechungsindices der verwendeten Dielektrika eine wohldefinierter Grad an Teilreflexion in Abhängigkeit von der verwendeten Wellenlänge des Laserlichts zweckmäßig einstellbar ist. Der Reflexionsgrad sollte dabei vorzugsweise so gering gewählt werden, dass die Intensität der reflektierten Lichtanteile gerade für die beabsichtigte Analyse der Funktionsfähigkeit ausreicht. Eine signifikante Beschränkung der Reichweite des Lidar-Sensors sollte damit nicht einhergehen. Die rein intern reflektierten Anteile führen insbesondere auf denjenigen Empfangselementen zu Signalen mit ausreichendem Signal-RauschVerhältnis, die zu derselben Gruppe (Bildpunkt) wie das jeweils aktive Sendeelement oder zu benachbarten Gruppen gehören.

Weiterhin betrifft die Erfindung ein Verfahren zur Funktionsdiagnose eines erfindungsgemäßen Lidar-Sensors, wobei die Sendeelemente einzeln nacheinander Laserlichtpulse aussenden und die anschließend von den Empfangselementen empfangenen Signale mit Sollsignalen verglichen werden. Signifikante Abweichungen der empfangenen Signale von den Sollabweichungen, etwa hinsichtlich der Intensität oder des Signalprofils, können sodann als Anhaltspunkte für Fehlfunktionen der Sende- oder Empfangselemente identifiziert werden.

In einer vorteilhaften Ausführungsform des Verfahrens werden für die Funktionsdiagnose solche Signale verwendet, die durch Anteile der Laserlichtpulse hervorgerufen werden, die innerhalb des Lidar-Sensors auf die Empfangselemente reflektiert werden, ohne in die Betriebsumgebung ausgesendet zu werden. Zu diesem Zweck umfasst der Lidar-Sensor insbesondere eine Optikeinheit mit abschnittsweiser dielektrischer Beschichtung, entsprechend der vorgenannten Ausführungsform. Die Länge des Lichtwegs solcher ausschließlich innerhalb des Lidar-Sensors verlaufenden Lichtanteile ist bekannt und unveränderlich, und die Funktionsdiagnose kann unabhängig von der Betriebsumgebung und insbesondere parallel zur Umgebungserfassung durchgeführt werden.

Die Funktionsdiagnose kann zur Erkennung von Fehlfunktionen aufgrund unterschiedlichster Ursachen durchgeführt werden, etwa aufgrund von Defekten individueller elektronischer Bauteile, aufgrund von Verschmutzungen oder aufgrund von strukturellen Beschädigungen etwa nach einem Verkehrsunfall bei in Kraftfahrzeugen eingesetzten Lidar-Sensoren.

### AUSFÜHRUNGSBEISPIELE DER ERFINDUNG

Weitere, die Erfindung verbessernde Maßnahmen werden nachstehend gemeinsam mit der Beschreibung von Ausführungsbeispielen der Erfindung anhand der Figuren näher dargestellt. Es zeigt in schematischer Form:
- Fig. 1:: einen Lidar-Sensor,
- Fig. 2a-d:: Ausführungsbeispiele der Sende-Empfangs-Einheit,
- Fig. 3:: einen Lidar-Sensor bei der Durchführung der Funktionsdiagnose, und
- Fig. 4a-c:: eine Darstellung des Verfahrens zur Funktionsdiagnose.

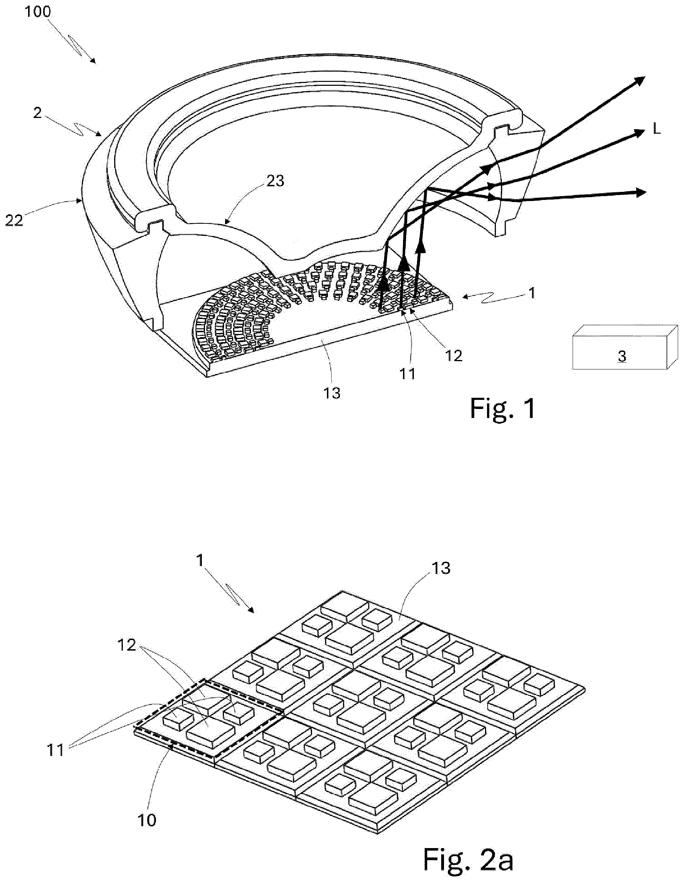

Fig. 1 zeigt in schematischer Darstellung eine perspektivische Schnittansicht eines Ausführungsbeispiels des erfindungsgemäßen Lidar-Sensors 100, umfassend die Sende-Empfangs-Einheit 1, die Optikeinheit 2, sowie die Steuer- und Auswerteeinheit 3. Die Sende-Empfangs-Einheit 1 weist eine Mehrzahl von Sendeelementen 11 und Empfangselementen 12 auf, die auf der gemeinsamen Leiterkarte 13 in einer gemeinsamen Ebene angeordnet sind, wobei die Hauptsenderichtung der Sendeelemente 11 und die Hauptempfangsrichtung der Empfangselemente 12 zueinander kollinear orientiert sind. Beispielhaft sind drei der Sendeelemente 12 aktiv und senden Laserlicht L aus. Die als Panoramaoptik mit einem Sichtfeld von 360° ausgebildete Optikeinheit 2 ist in Hauptsenderichtung zentriert vor der Sende-Empfangs-Einheit 1 angeordnet und lenkt das Laserlicht L in der dargestellten Weise in die Betriebsumgebung des Lidar-Sensors 100 um. Die Optikeinheit 2 umfasst den Reflektor 23 und die Linse 22, die jeweils als rotationssymmetrische Komponenten ausgebildet sind. Aus der Betriebsumgebung zurückreflektiertes Laserlicht wird auf entsprechendem Lichtweg von der Optikeinheit 2 auf die aktive Fläche der Sende-Empfangs-Einheit 1 gelenkt und dort von den Empfangselementen 12 detektiert.

Typischerweise sind die Sendeelemente 11 als Laserdioden und die Empfangselemente 12 als Photodioden, etwa als Vertical Avalanche Photo Diode (VAPD), ausgebildet. Den Laserdioden sind vorzugsweise kollimierende Optiken zugeordnet (hier nicht dargestellt). Die aktive Fläche der Sende-Empfangs-Einheit 1 ist kreisringförmig ausgebildet und weist Bildpunkte auf, die durch Gruppen aus Paaren von Sendeelementen 11 und Empfangselementen 12 gebildet sind. Zur Steuerung der Sendeelemente 11 und zur Auswertung der von den Empfangselementen 12 empfangenen Signale dient die Steuer- und Auswerteinheit 3, die auf nicht dargestellte Weise mit der Leiterkarte 13 verbunden ist.

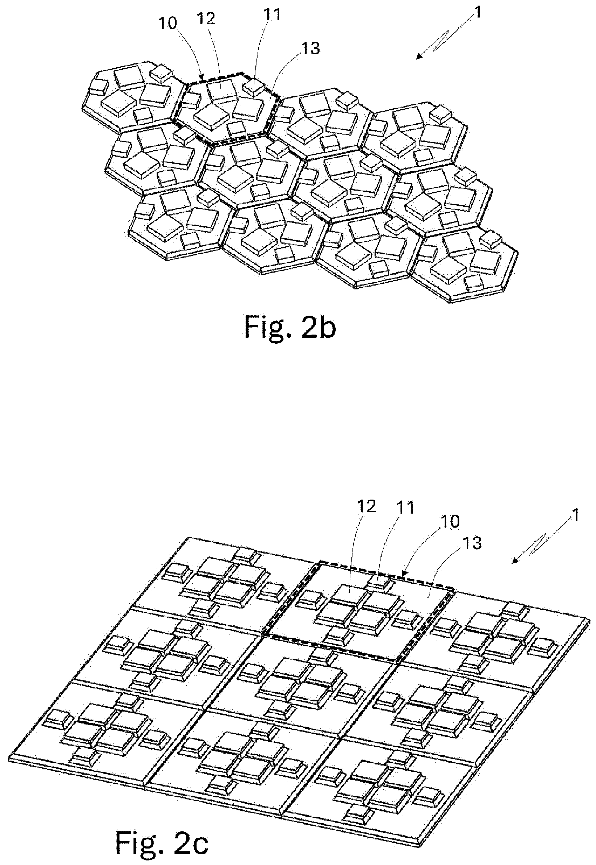

Fig. 2a-d zeigen in schematischer Darstellung Teilansichten von Ausführungsbeispielen der erfindungsgemäßen Sende-Empfangs-Einheit 1, wobei allen Ausführungsbeispielen gemein ist, dass die Sendeelemente 11 und die Empfangselemente 12 in Gruppen 10 angeordnet sind, wobei jede Gruppe 10 wenigstens zwei Sendeelemente 11 und wenigstens zwei Empfangselemente 12 umfasst. Die Gesamtheit der Gruppen 10 weist jeweils eine gitterförmige Anordnung unter Bildung der aktiven Fläche der Sende-Empfangs-Einheiten 1 auf, wobei jede Gruppe 10 einen Bildpunkt der aktiven Fläche darstellt. Die Sendeelemente 11 und die Empfangselemente 12 sind jeweils sämtlich auf einer gemeinsamen Leiterkarte 13 angeordnet.

In den Ausführungsbeispielen der Fig. 2a-c weisen die Gruppen 10 jeweils zwei, drei bzw. vier gleichartige Sendeelemente 11 und Empfangselemente 12 auf. Jeder Bildpunkt ist somit redundant gegen Fehlfunktionen einzelner Komponenten abgesichert. Die erforderliche Redundanz kann gemäß einer der in den sicherheitsrelevanten Normen definierten Sicherheitsarchitekturen ("NooM", vgl. IEC 61508-6 Anhang B) implementiert werden, etwa 1oo2 in Fig. 2a.

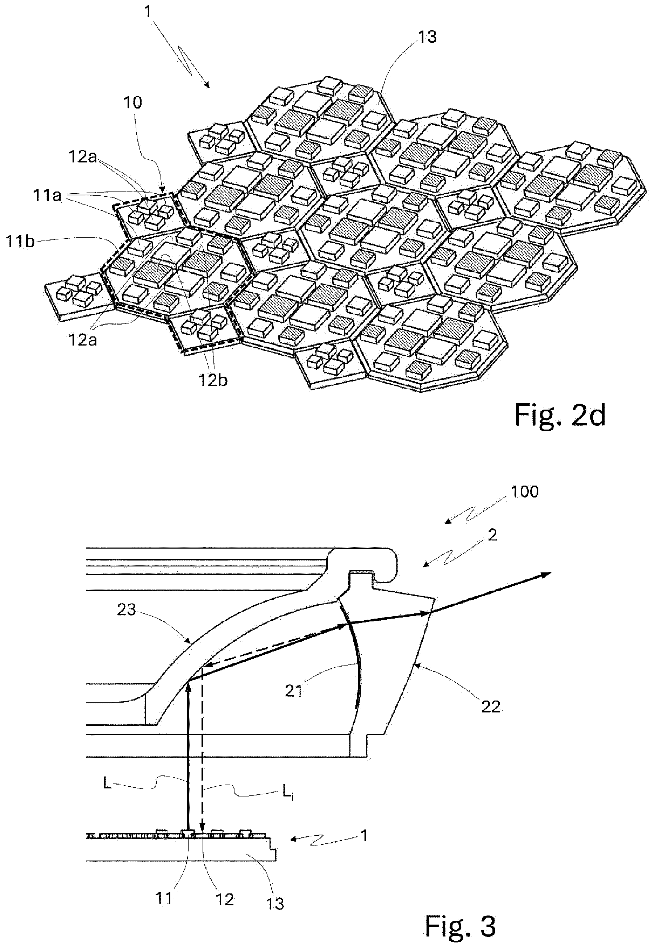

Im Ausführungsbeispiel der Fig. 2d weist jede Gruppe 10 eine Untergruppe mit vier Sendeelemente 11a zur Aussendung von Laserlicht einer ersten Wellenlänge, vier Sendeelemente 11b (schraffiert) zur Aussendung von Laserlicht einer zweiten Wellenlänge, zwei Empfangselemente 12a mit einer maximalen Empfindlichkeit im Bereich der ersten Wellenlänge und zwei Empfangselemente 12b (schraffiert) mit einer maximalen Empfindlichkeit im Bereich der zweiten Wellenlänge auf. Dadurch ist eine 2oo4 Sicherheitsarchitektur gebildet. Die Gruppen 10 werden komplettiert durch zwei weitere Untergruppen, die hinsichtlich der funktionalen Sicherheit 1oo2 Systeme bilden und jeweils zwei Sendeelemente 11a und zwei Empfangselemente 12a umfassen. Dadurch ist ein besonders fehlertolerantes und ausfallsicheres System gebildet, das durch Verwendung zweier unterschiedlicher Wellenlängen zudem auch eine besonders verlässliche Erkennung der Betriebsumgebung bei schwierigen oder wechselnden Bedingungen (Beleuchtung, Wetter, etc) ermöglicht. Bei Bedarf könnte auch ein komplexeres System unter Verwendung einer größeren Anzahl unterschiedlicher Wellenlängen implementiert werden.

Fig. 3 zeigt eine schematische Schnittansicht eines Lidar-Sensors 100 bei der Durchführung des erfindungsgemäßen Verfahrens zur Funktionsdiagnose, wozu die Sendeelemente 11 einzeln nacheinander Laserlichtpulse L aussenden und die anschließend von den Empfangselementen 12 empfangenen Signale mit Sollsignalen verglichen werden. Im dargestellten Ausführungsbeispiel weist die Optikeinheit 2 eine dielektrische Beschichtung 21 auf der Innenseite der Linse 22 auf, deren Wirkung darin besteht, dass Anteile Lᵢ des von den Sendeelementen 11 ausgesendeten Laserlichts L auf die Empfangselemente 12 reflektiert werden. Vorliegend ist die beschichtete Oberfläche der Linse 22 aufgrund der dielektrischen Beschichtung 21 teilverspiegelt, wobei die Intensität der reflektierten Anteile Lᵢ wesentlich geringer ist als die Intensität des in die Betriebsumgebung ausgesendeten Laserlichts L. Für die Funktionsdiagnose werden vorzugsweise nur solche Signale verwendet, die durch die Anteile Lᵢ der Laserlichtpulse L hervorgerufen werden, die innerhalb des Lidar-Sensors 100 von der dielektrischen Beschichtung 21 auf die Empfangselemente 12 reflektiert werden, ohne in die Betriebsumgebung ausgesendet zu werden.

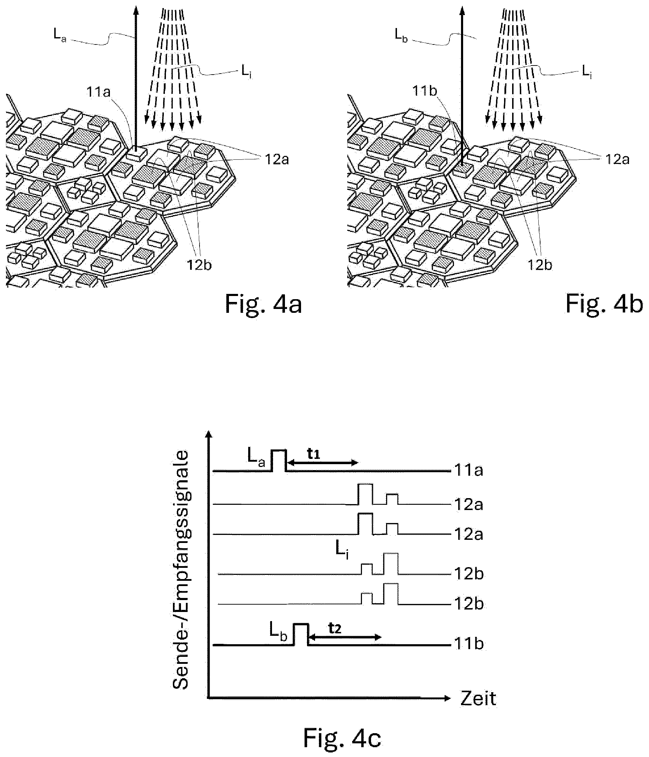

Fig. 4a-c zeigen weitere Darstellungen zur Illustration des Verfahrens zur Funktionsdiagnose des erfindungsgemäßen Lidar-Sensors, basierend auf einer Sende-Empfangs-Einheit 1 gemäß dem Ausführungsbeispiel der Fig. 2d. Fig. 4a und Fig. 4b zeigen das aufeinander folgende Aussenden von Laserlichtpulsen Lₐ, L_{b} unterschiedlicher Wellenlängen durch einzelne Sendeelemente 11a, 11b und das anschließende Empfangen des vorzugsweise ausschließlich innerhalb des Lidar-Sensors reflektierten Laserlichts Lᵢ mit den vier Empfangselementen 12a, 12b. Die zugehörigen Signalverläufe über der Zeit t sind in Fig. 4c dargestellt. Die von den Empfangselementen 12a, 12b auf den beiden Wellenlängen jeweils empfangenen Signale werden erfindungsgemäß mit zugehörigen Sollsignalen (nicht dargestellt) verglichen, woraus die Funktionsfähigkeit jedes Bildpunkts detailliert diagnostiziert werden kann.

Dabei können mittels der zugehörigen Steuer- und Auswerteeinheit aus den empfangenen Signalen zweckmäßige Größen für den Vergleich gebildet werden, im Beispiel der Fig. 4c etwa für jedes Empfangselement 12a, 12b das Amplitudenverhältnis der Echos Lᵢ auf den beiden unterschiedlichen Wellenlängen. Weicht das Amplitudenverhältnis beispielsweise auf sämtlichen Empfangselementen 12a, 12b signifikant von einem Sollwert ab, so kann das einen Hinweis auf eine Fehlfunktion eines der Sendeelemente 11a, 11b geben. Liegt eine Abweichung hingegen nur bei einem der Empfangselemente 12a, 12b vor, so ist dort von einer Fehlfunktion auszugehen. Weitere Vergleichsgrößen können beispielsweise mittels der detektierten Laufzeitdifferenzen gebildet werden. Prinzipiell ist das dargestellte Ausführungsbeispiel zur Durchführung diverser Diagnoseschritte geeignet, und es können damit Sicherheitsarchitekturen etwa vom Typ 1oo2D oder 2oo4D realisiert werden. Damit lassen sich hohe Safety Integrity Level (SIL) erreichen, beispielsweise für Anwendungen in Kraftfahrzeugen (ASIL), und ein entsprechender Lidar-Sensor wäre selbst für Luft- und Raumfahrt geeignet.

### Bezugszeichenliste:

- 100: Lidar-Sensor
- 1: Sende-Empfangs-Einheit
- 10: Gruppe
- 11, 11a, 11b: Sendeelement
- 12, 12a, 12b: Empfangselement
- 13: Leiterkarte
- 2: Optikeinheit
- 21: dielektrische Beschichtung
- 22: Linse
- 23: Reflektor
- 3: Steuer- und Auswerteeinheit

- L, Lₐ, L_{b}, Lᵢ: Laserlicht

## Patentansprüche

1. Sende-Empfangs-Einheit (1) für einen Lidar-Sensor (100), umfassend eine Mehrzahl von Sendeelementen (11) zur Aussendung von Laserlicht (L) in eine Betriebsumgebung des Lidar-Sensors (100), eine Mehrzahl von Empfangselementen (12) zum Empfang von in der Betriebsumgebung reflektiertem Laserlicht (L),
**dadurch gekennzeichnet,**
**dass** die Sendeelemente (11) und die Empfangselemente (12) in einer gemeinsamen Ebene angeordnet sind, wobei die Hauptsenderichtung der Sendeelemente (11) und die Hauptempfangsrichtung der Empfangselemente (12) zueinander kollinear orientiert sind.

2. Sende-Empfangs-Einheit (1) nach Anspruch 1,
**dadurch gekennzeichnet,**
**dass** die Sendeelemente (11) und die Empfangselemente (12) auf einer gemeinsamen Leiterkarte (13) angeordnet sind.

3. Sende-Empfangs-Einheit (1) nach einem der vorgenannten Ansprüche,
**dadurch gekennzeichnet,**
**dass** die Sendeelemente (11) und die Empfangselemente (12) in Gruppen (10) angeordnet sind, wobei jede Gruppe (10) wenigstens ein Sendeelement (11) und ein Empfangselement (12) umfasst.

4. Sende-Empfangs-Einheit (1) nach Anspruch 3,
**dadurch gekennzeichnet,**
**dass** die Gesamtheit der Gruppen (10) eine gitterförmige Anordnung unter Bildung der aktiven Fläche der Sende-Empfangs-Einheit (1) aufweist, wobei jede Gruppe (10) einen Bildpunkt der aktiven Fläche darstellt.

5. Sende-Empfangs-Einheit (1) nach Anspruch 3 oder 4,
**dadurch gekennzeichnet,**
**dass** jede Gruppe (10) wenigstens zwei gleichartige Sendeelemente (11) und wenigstens zwei gleichartige Empfangselemente (12) aufweist.

6. Sende-Empfangs-Einheit (1) nach einem der Ansprüche 3 bis 5,
**dadurch gekennzeichnet,**
**dass** jede Gruppe (10) wenigstens ein Sendeelement (11a) zur Aussendung von Laserlicht (Lₐ) einer ersten Wellenlänge, wenigstens ein Sendeelement (11b) zur Aussendung von Laserlicht (L_{b}) einer zweiten Wellenlänge, wenigstens ein Empfangselement (12a) mit einer maximalen Empfindlichkeit im Bereich der ersten Wellenlänge und wenigstens ein Empfangselement (12b) mit einer maximalen Empfindlichkeit im Bereich der zweiten Wellenlänge aufweist.

7. Lidar-Sensor (100), wenigstens umfassend eine Sende-Empfangs-Einheit (1) gemäß einem der vorgenannten Ansprüche, eine Optikeinheit (2) zur Umlenkung des Laserlichts (L) der Sendeelemente (11) in eine Betriebsumgebung des Lidar-Sensors (100) und zur Umlenkung des in der Betriebsumgebung reflektierten Laserlichts (L) auf die Empfangselemente (12), und eine Steuer- und Auswerteeinheit (3) zur Steuerung der Sende-Empfangs-Einheit (1) und zur Auswertung insbesondere der Lichtlaufzeit zwischen den Sendeelementen (11) und den Empfangselementen (12).

8. Lidar-Sensor (100) nach Anspruch 7,
**dadurch gekennzeichnet,**
**dass** die Optikeinheit (2) ein Sichtfeld von 360° aufweist.

9. Lidar-Sensor (100) nach Anspruch 8,
**dadurch gekennzeichnet,**
**dass** die aktive Fläche der Sende-Empfangs-Einheit (1) kreisringförmig ausgebildet ist.

10. Lidar-Sensor (100) nach einem der Ansprüche 7 bis 9,
**dadurch gekennzeichnet,**
**dass** die Optikeinheit (2) zumindest abschnittsweise eine dielektrische Beschichtung (21) aufweist, deren Wirkung darin besteht, dass Anteile (Lᵢ) des von den Sendeelementen (11) ausgesendeten Laserlichts (L) zwecks Funktionsdiagnose auf die Empfangselemente (12) reflektiert werden, ohne in die Betriebsumgebung ausgesendet zu werden.

11. Lidar-Sensor (100) nach einem der Ansprüche 7 bis 10,
**dadurch gekennzeichnet,**
**dass** die Optikeinheit (2) eine Linse (22) umfasst, wobei die Linse (22) auf einer der Sende-Empfangs-Einheit (1) zugewandten Oberfläche zumindest abschnittsweise eine dielektrische Beschichtung (21) aufweist, die eine teilreflektierende Wirkung auf das von den Sendeelementen (11) ausgesendete Laserlicht (L) aufweist.

12. Verfahren zur Funktionsdiagnose eines Lidar-Sensors (100) gemäß einem der Ansprüche 7 bis 11, wobei die Sendeelemente (11) einzeln nacheinander Laserlichtpulse (L) aussenden und die anschließend von den Empfangselementen (12) empfangenen Signale mit Sollsignalen verglichen werden.

13. Verfahren nach Anspruch 12,
**dadurch gekennzeichnet,**
**dass** für die Funktionsdiagnose solche Signale verwendet werden, die durch Anteile der Laserlichtpulse (L) hervorgerufen werden, die innerhalb des Lidar-Sensors (100) auf die Empfangselemente (12) reflektiert werden, ohne in die Betriebsumgebung ausgesendet zu werden.
